# EUROPÄISCHE PATENTSCHRIFT

(11) **EP 2 403 740 B1**
(45) Veröffentlichungstag und Bekanntmachung des Hinweises auf die Patenterteilung: **18.12.2013**
(21) Anmeldenummer: 10704570.0
(22) Anmeldetag: 19.02.2010
(51) Int. Cl.: B60S 9/02

(54) **STÜTZFUSS FÜR FAHRZEUGE**
SUPPORTING FOOT FOR VEHICLES
ASSEMBLAGE DE PIED DE SUPPORT DE VEHICULE

(30) Priorität: 03.03.2009 DE 102009001299
(43) Veröffentlichungstag der Anmeldung: 11.01.2012
(73) Patentinhaber: SAF-HOLLAND GmbH, 63856 Bessenbach (DE)
(72) Erfinder: CHRIST, Armin, 63856 Bessenbach (DE)
(74) Vertreter: Müller Schupfner & Partner
(86) Internationale Anmeldenummer: PCT/EP2010/052091
(87) Internationale Veröffentlichungsnummer: WO 2010/100038

(56) Entgegenhaltungen:
- DE-A1- 3 642 079
- DE-A1- 3 734 073
- DE-A1- 4 003 414
- GB-A- 2 207 102
- US-A- 4 078 774

## Beschreibung

Die vorliegende Erfindung bezieht sich auf einen Stützfuß für Fahrzeuge, wie Sattelanhänger oder dergleichen, bei welchem am unteren Ende einer ausfahrbaren Stützeneinheit ein schwenkbarer Stützfuß vorgesehen ist, der ausgelegt ist, einen Versatz der Position des Fahrzeugs auszugleichen.

Stützfüße zum Ausgleich eines Positionsversatzes sind hinlänglich aus dem Stand der Technik bekannt. Derartige Stützvorrichtungen sind an der vorderen Unterseite von beispielsweise Sattelanhängern paarweise angeordnet und kommen dann zum Einsatz, wenn der Sattelanhänger vom Sattelschlepper getrennt abgestellt wird. Bei längeren Standzeiten führen Undichtigkeiten im Brems- und Luftfedersystem dazu, dass sich der hintere Teil des Sattelaufliegers absenkt und infolge der arretierten Parkbremse der mechanischen Achsaufhängung sich das Fahrzeug bzw. der Sattelanhänger vorwärts bewegt. In dieser Situation sind die Stützvorrichtungen bzw. deren Stützeinheiten und Stützrohre einer Biege- und Knickspannung ausgesetzt, die zu ihrer Beschädigung oder zum Versagen der Stützen führen können. Um diesen Positionsversatz ausgleichen zu können, wurden Stützfüße entwickelt, die schwenkbar angeordnet oder horizontal verschiebbar sind. So offenbart beispielsweise die DE 40 03 414 einen Stützfuß, welcher ein schwenkbar gelagertes Rollsegment und eine Fußplatte aufweist, wobei das Rollsegment auf der Fußplatte abrollbar ist. Problematisch bei derartigen Stützfüßen ist jedoch, dass diese im eingezogenen Zustand (Fahrbetrieb) Klappergeräusche aufgrund der separaten Elemente verursachen und darüber hinaus aufgrund der häufigen minimalen Relativbewegungen zueinander ein Verschleiß der Teile hervorgerufen wird, ohne den Stützfuß in seinen operativen Zustand gebracht zu haben.

Es ist somit Aufgabe der vorliegenden Erfindung, einen Stützfuß für Fahrzeuge, wie Sattelanhänger oder dergleichen, sowie ein Verfahren zum Betätigen eines Stützfußes für Fahrzeuge, wie Sattelanhänger oder dergleichen, vorzusehen, mittels welchen Klappergeräusche im Fahrbetrieb verringert oder vermieden werden können und der Verschleiß der Bauteile reduziert werden kann.

Diese Aufgabe wird durch einen Stützfuß für Fahrzeuge, wie Sattelanhänger oder dergleichen, mit den Merkmalen des Anspruchs 1 sowie durch ein Verfahren zum Betätigen eines Stützfußes für Fahrzeuge, wie Sattelanhänger oder dergleichen, mit den Merkmalen des Anspruchs 11 gelöst. Bevorzugte Ausführungsformen ergeben sich aus den abhängigen Ansprüchen.

Erfindungsgemäß ist ein Stützfuß für Fahrzeuge, wie Sattelanhänger oder dergleichen, vorgesehen, umfassend ein Fußelement mit einem Auflagebereich zur Auflage auf einem Untergrund und ein Ausgleichselement zur Aufnahme einer Stützeneinheit und zum Ausgleich eines Positionsversatzes derselben, wobei die Stützeneinheit teleskopierbar und mit einem ersten und einem zweiten Stützelement ausgebildet ist, wobei das zweite Stützelement in Bezug auf das erste Stützelement zwischen einer ersten und einer zweiten Position verlagerbar ist, und wobei das erste Stützelement in der zweiten Position des zweiten Stützelements mit dem Fußelement in Eingriff steht. Der Stützfuß dient somit besonders zweckmäßigerweise für Fahrzeuge bzw. Kraftfahrzeuge und insbesondere für Landfahrzeuge. Dies sind insbesondere beispielsweise Sattelanhänger, welche von einem Lastkraftwagen gezogen werden, um schwere Lasten zu transportieren. Bei einem von einem Lastkraftwagen entkoppelten Fahrzeug ist der Stützfuß somit vorgesehen, um die vom Rahmen des Fahrzeugs in den Stützfuß eingeleitete Kraft über das Fußelement auf einen Untergrund zu übertragen. Hierfür weist das Fußelement einen Auflagebereich zur Auflage auf einem Untergrund bzw. Boden auf. Dieses nimmt die aus dem Rahmen eines Fahrzeugs in die Stützeinheit eingeleiteten Kräfte auf. Zwischen Fußelement und Stützeinheit ist das Ausgleichselement vorgesehen, um einen Positionsversatz der Stützeinheit in Bezug auf das Fußelement auszugleichen bzw. zu kompensieren. Der Begriff Positionsversatz kann hierbei insbesondere in Form der Veränderung der Position in linearer Richtung (beispielsweise horizontal bzw. in Längsrichtung des Fußelements) verstanden werden. Ebenfalls kann ein Winkelversatz des Stützelements in Bezug auf das Fußelement ausgeglichen bzw. kompensiert werden, wobei dieser Winkelversatz insbesondere in Fahrzeuglängsrichtung bzw. im Wesentlichen parallel zur Schwenkebene aufgrund der gekrümmten Abrollfläche des Ausgleichselements erfolgen kann. Die Stützeneinheit weist vorteilhafterweise zumindest ein erstes und ein zweites Stützelement aus. Diese sind zweckmäßigerweise entlang einer Verlagerungsrichtung bzw. Einschub- und Ausschubrichtung teleskopierbar bzw. ineinander verschiebbar bzw. aneinander vorbei verschiebbar bzw. translatorisch verlagerbar. Hierbei kann das erste Stützelement im Wesentlichen ortsfest bzw. rahmenfest bzw. am Rahmen des Fahrzeugs festgelegt sein. Das zweite Stützelement ist entsprechend hierzu entlang der Verlagerungsrichtung bewegbar. Besonders vorteilhafterweise können das erste und zweite Stützelement im Wesentlichen konzentrisch zueinander derart angeordnet sein, dass das zweite Stützelement innerhalb des ersten Stützelements angeordnet bzw. anordenbar ist. In anderen Worten kann das zweite Stützelement in das erste Stützelement hineingeschoben werden. Das erste und/oder zweite Stützelement können zweckmäßigerweise rohrförmig ausgebildet sein. Es versteht sich, dass ebenfalls auch mehr als zwei Stützelemente vorgesehen sein können, welche ineinander teleskopierbar sind. In der Betriebsposition des Stützfußes ist das zweite Stützelement in Bezug auf das erste Stützelement zur ersten Position hin verlagert. In anderen Worten sind das erste und zweite Stützelement derart auseinanderbewegt, dass die Stützeneinheit eine größere Länge ausbildet. In dieser Position kann das Ausgleichselement eine Relativbewegung des Fußelements in Bezug auf die Stützeneinheit vorteilhaft ausgleichen. Um das Fahrzeug in den Fahrbetrieb zu versetzen, wird das zweite Stützelement in Bezug auf das erste Stützelement in eine zweite Position verlagert, in welcher die Stützeneinheit im Wesentlichen ihre kleinste Längserstreckung aufweist. In der zweiten Position des zweiten Stützelements steht das erste Stützelement mit dem Fußelement in Eingriff bzw. kontaktiert dieses bzw. berührt dieses. In anderen Worten stehen das erste Stützelement und das Fußelement derart in Eingriff, dass das Fußelement in Bezug auf die Stützeneinheit fixiert wird und somit keine Relativbewegung (insbesondere in Längsrichtung des Fußelements) zu der Stützeneinheit bzw. dem Fahrzeugrahmen vollführen kann. In anderen Worten wird das Fußelement mit dem ersten Stützelement der Stützeneinheit verspannt bzw. verklemmt. Hierdurch wird besonders vorteilhafterweise vermieden, dass die Fußplatte im Fahrbetrieb des Fahrzeugs Klappergeräusche verursacht. Darüber hinaus wird ein schleichender Verschleiß aufgrund von minimalen Bewegungen der Elemente zueinander durch Fixieren des Fußelements verringert. Die Stützeneinheit ist zweckmäßigerweise an dem Ausgleichselement derart angeordnet, dass diese dreh- bzw. schwenkbar, insbesondere um eine Schwenkachse entlang einer Schwenkebene, damit verbunden ist. Die Verbindung kann hierbei derart gestaltet sein, dass das Ausgleichselement von der Stützeneinheit lösbar ist. Das Ausgleichselement und das Fußelement können in Bezug aufeinander zwischen einer ersten bzw. Ursprungsposition bzw. Nullstellung, in welcher das Ausgleichselement in Bezug auf das Fußelement im Wesentlichen mittig angeordnet ist, und einer zweiten Position verlagert werden. Die zweite Position ist infolgedessen insbesondere eine ausgelenkte Position, wobei die Verlagerung des Ausgleichselements besonders vorteilhafterweise - ausgehend von der Ursprungsposition - sowohl nach vorne (vordere Position) als auch nach hinten (hintere Position) erfolgen kann (gesehen mit Bezug auf das Fußelement). Somit liegt die erste Position insbesondere zwischen der vorderen und hinteren Position. Aufgrund der Tatsache, dass das Ausgleichselement auf dem Fußelement abrollbar ist, liegen die erste Position und die zweite Position vorzugsweise im Wesentlichen entlang einer Geraden bzw. Linie bzw. Achse bzw. auf einer Schwenkebene. Der Auflagebereich des Fußelements ist vorteilhafterweise im Wesentlichen plattenförmig ausgebildet und kann eine im Wesentlichen rechteckige Form aufweisen mit einer Längserstreckung (Längsrichtung), die größer als dessen Breitenerstreckung ist. Das Ausgleichselement ist zweckmäßigerweise schwenkbar gelagert, wobei der Begriff "schwenkbar gelagert" dahingehend zu interpretieren ist, dass das Ausgleichselement in Bezug auf das Fußelement schwenkbar verlagerbar ist. Hierfür weist das Ausgleichselement eine Schwenkachse auf, die zweckmäßigerweise im Wesentlichen mit der Lagerachse der Stützeneinheit übereinstimmen kann. Die Schwenkachse steht zweckmäßigerweise im Wesentlichen senkrecht zur Längserstreckung bzw. Längsachse des Fußelements, respektive im Wesentlichen senkrecht zu einer Ebene, in welcher die Längserstreckung bzw. Längsachse des Fußelements liegt. Das Ausgleichselement ist auf einem Abrollbereich des Fußelements abrollbar, welcher vorzugsweise im Wesentlichen der dem Untergrund zugewandten Seite des Auflagebereichs des Fußelements gegenüberliegend angeordnet ist. Um ein Abrollen des Ausgleichselements zu gewährleisten, weist das Ausgleichselement eine Abrollfläche auf, die entlang einer Schwenkebene gekrümmt ist. Die Schwenkebene ist hierbei im Wesentlichen parallel zur Längsachse des Fußelements bzw. im Wesentlichen rechtwinklig zur Schwenkachse des Ausgleichselements. Die Krümmung der Abrollfläche kann beliebig gestaltet sein. Es ist jedoch besonders vorteilhaft, wenn die Krümmung der Abrollfläche kurven- oder kreisförmig, d.h. nicht eckig, ist. Durch die Krümmung des Ausgleichselements entlang der Schwenkebene ist es somit möglich, dass das Ausgleichselement auf dem Fußelement entlang dessen Längserstreckung bzw. Längsachse abrollen kann, so dass ein Positionsversatz des Fahrzeugs in Längsrichtung kompensiert werden kann.

Vorteilhafterweise steht das erste Stützelement in der zweiten Position des zweiten Stützelements mit einem Führungsbereich des Fußelements in Eingriff, welcher als sich vom Auflagebereich vorzugsweise im Wesentlichen senkrecht erstreckender Wandbereich ausgebildet ist. Der Führungsbereich kann somit als sich vom Auflagebereich weg erstreckender und entlang der Längsachse bzw. -erstreckung des Fußelements erstreckender Wandabschnitt ausgebildet sein. Bei der Verwendung von lediglich einem Führungsbereich ist dieser zweckmäßigerweise im Wesentlichen (in Querrichtung gesehen) mittig am Fußelement angeordnet und ragt somit besonders zweckmäßigerweise zumindest teilweise in einen Rücksprung der Abrollfläche des Ausgleichselements hinein. Besonders vorteilhafterweise sind jedoch zwei Führungsbereiche vorgesehen, die Seitenwände des Fußelements bilden und sich entlang der Längserstreckung des Fußelements im Wesentlichen senkrecht zum Auflagebereich von diesem weg erstrecken. Die Führungsbereiche dienen somit insbesondere einer Führung des Ausgleichselements in Querrichtung, da das Ausgleichselement im Wesentlichen zwischen den Führungsbereichen angeordnet ist.

Besonders zweckmäßigerweise verjüngt sich der Führungsbereich zu seinem freien Ende hin. Somit kann der Führungsbereich Eingriffsflächen bzw. -kanten für den Kontakt mit dem ersten Stützelement aufweisen, welche derart zueinander geneigt sind, dass sich der Führungsbereich (bei gleich bleibender Wandstärke) zu seinem freien Ende hin verjüngt. Hierdurch wird sichergestellt, dass das Fußelement im Fahrbetrieb (d.h. der zweiten Position des zweiten Stützelements) seine Ursprungs- bzw. Nullstellungsposition automatisch einnimmt.

Bevorzugterweise weist das erste Stützelement einen distalen Endbereich auf, der in der zweiten Position des zweiten Stützelements mit dem Fußelement in Eingriff steht. In anderen Worten ist der untere Bereich bzw. Stirnseitenbereich des ersten Stützelements mit dem Fußelement in Eingriff bringbar.

Vorteilhafterweise weist das erste Stützelement eine Ausnehmung an einem distalen Endbereich auf, welche ausgelegt ist, in der zweiten Position des zweiten Stützelements eine Schwenkachse des Ausgleichselements zumindest teilweise aufzunehmen. Die Schwenkachse des Ausgleichselements ist insbesondere derart angeordnet, dass sich diese durch einen distalen Endbereich des zweiten Stützelements erstreckt. Um das Ausgleichselement schwenkbar an dem zweiten Stützelement zu lagern, können entsprechende Lagerungselemente vorgesehen sein. Die Ausnehmung kann als Rücksprung, Durchbruch oder ähnliches ausgebildet sein, welche sich von einer Stirnseite des ersten Stützelements in dieses derart hineinerstreckt, dass sie die Schwenkachse und die entsprechenden Lagerungsmittel zumindest teilweise darin aufnehmen kann. Hierbei ist die Größe der Ausnehmung derart bemessen, dass bei einer Anordnung des zweiten Stützelements in dessen zweiter Position ein Kontakt zwischen Schwenkachse bzw. deren Elementen (beispielsweise Lageelementen) und dem ersten Stützelement nicht oder nur geringfügig stattfindet, so dass ein ausreichender Eingriff zwischen erstem Stützelement und Fußelement gewährleistet werden kann.

In einer weiteren bevorzugten Ausführungsform ist das zweite Stützelement in Bezug auf das erste Stützelement weiterhin in eine dritte Position verlagerbar, in welcher das erste Stützelement mit dem Ausgleichselement und/oder dessen Schwenkachse in Eingriff bringbar ist. Das zweite Stützelement ist somit in anderen Worten über die zweite Position hinaus in eine dritte Position verlagerbar, so dass die zweite Position zwischen der ersten und dritten Position bei einer translatorischen Verschiebung bzw. Verlagerung der Stützelemente angeordnet ist. Infolgedessen ist das zweite Stützelement in dessen dritter Position am weitesten in das erste Stützelement hinein geschoben. Bei einer Verlagerung des zweiten Stützelements in die zweite Position gelangt somit das erste Stützelement mit dem Fußelement in Eingriff. Bei einer weiteren Verschiebung des zweiten Stützelements in die dritte Position verbleibt der Eingriff zwischen Fußelement und erstem Stützelement, wobei zusätzlich das erste Stützelement mit dem Ausgleichselement und/oder dessen Schwenkachse in Eingriff bringbar ist. Dies ist möglich, da eine Verschiebung zwischen Fußelement und Ausgleichselement in Verlagerungsrichtung möglich ist. Hierdurch wird besonders zweckmäßigerweise eine Festlegung von sowohl Fußelement als auch Ausgleichselement ermöglicht, so dass Klappergeräusche im Fahrbetrieb noch besser vermieden werden können. Die Verschiebung bzw. Verlagerung bzw. Bewegung von Fußelement zu Ausgleichselement in Verlagerungsrichtung ist möglich, da eine Vorspanneinrichtung, welche als Feder ausgebildet sein kann, vorgesehen ist, um das Ausgleichselement in Bezug auf das Fußelement in dessen Ursprungsposition vorzuspannen. Hierdurch wird gewährleistet, dass beim Beabstanden des Stützfußes vom Boden (d.h. beim Einfahren des Stützfußes in Fahrbetrieb) das Ausgleichselement durch die Vorspanneinrichtung in die Grundstellung gebracht werden kann. Zweckmäßigerweise ist die Vorspanneinrichtung aus zumindest einer Feder ausgebildet, welche zwischen dem Fußelement und dem Ausgleichselement verspannt ist, wobei die Feder insbesondere an dem Auflagebereich des Fußelements angeordnet sein kann. Es versteht sich, dass ebenfalls eine Vielzahl von Federn vorgesehen sein kann. So können beispielsweise zwei Federn vorgesehen sein, welche - in Längsrichtung des Auflagebereichs gesehen -jeweils vorne und hinten am Auflagebereich angeordnet bzw. fixiert sind und entsprechend vorne und hinten an den Randbereichen des Ausgleichselements befestigt sind. Die Federn sind zweckmäßigerweise als Schraubenfedern ausgeführt und lösbar am Fußelement und Ausgleichselement angeordnet, um einen einfachen Austausch zu gewährleisten. Bei einer Verschwenkung des Ausgleichselements können die Federn entsprechend in einem Rücksprung des Ausgleichselements zumindest teilweise aufgenommen werden.

Weiterhin bevorzugt ist die Eingriffsfläche des ersten Stützelements in Bezug auf die Verlagerungsrichtung des zweiten Stützelements geneigt und vorzugsweise im Wesentlichen kongruent zu einer Eingriffsfläche des Fußelements. Die Eingriffsfläche des ersten Stützelements ist somit diejenige Fläche, die mit dem Fußelement in Eingriff gelangt bzw. dieses kontaktiert. Entsprechendes gilt für die Eingriffsfläche des Fußelements. Die Eingriffsflächen sind hierbei derart ausgebildet, dass diese im Wesentlichen kongruent zueinander sind, d.h. die gleiche Neigung aufweisen, um das Fußelement in dessen Ursprungsposition zu fixieren. Besonders zweckmäßigerweise sind die Eingriffsflächen des zweiten Stützelements derart zueinander geneigt, dass diese sich nach außen hin erweitern. Besonders vorteilhafterweise sind diese in einem Winkel von etwa 10 bis etwa 80°, besonders zweckmäßigerweise etwa 45° zur Längserstreckung der Stützeneinheit geneigt.

In einer weiteren bevorzugten Ausführungsform ist zumindest ein Eingriffselement am ersten Stützelement vorgesehen, welches ausgelegt ist, mit dem Ausgleichselement in Eingriff zu gelangen. Das Eingriffselement dient somit der Fixierung bzw. Festlegung des Ausgleichselements, so dass eine Verschwenkung des Ausgleichselements in der zweiten bzw. dritten Position des zweiten Stützelements verhindert werden kann, wodurch vorteilhafterweise Klappergeräusche im Fahrbetrieb vermieden werden können.

Zweckmäßigerweise sind zwei Eingriffselemente vorgesehen, die an im Wesentlichen gegenüberliegenden Seiten des ersten Stützelements angeordnet sind. In anderen Worten ist je ein Eingriffselement vorne und hinten oder seitlich (d.h. rechts und links) des ersten Stützelements angeordnet. Bei einer seitlichen Anordnung ist es weiterhin vorteilhaft, dass das Ausgleichselement in Querrichtung zusätzlich fixiert werden kann.

Vorzugsweise steht das Eingriffselement in der zweiten und/oder dritten Position des zweiten Stützelements mit dem Ausgleichselement in Eingriff. Hierdurch wird sichergestellt, dass sowohl Fußelement als auch Ausgleichselement in ihrer (Ursprungs-)Position fixiert werden können, so dass Klappergeräusche vermieden und Verschleiß reduziert werden kann.

Die Abrollfläche des Ausgleichselements kann zumindest bereichsweise einen Rücksprung aufweisen, der besonders zweckmäßigerweise im Bereich oder vorzugsweise mittig zur Mittelebene ausgebildet ist. Hierbei kann sich der Rücksprung im Wesentlichen umfänglich zumindest über einen Teil der Abrollfläche erstrecken. Es versteht sich, dass zusätzlich oder anstelle eines Rücksprungs ebenfalls eine Aussparung bzw. Durchbrechung der Mantelfläche des Ausgleichselements vorgesehen sein kann. Die zur Schwenkachse hin gerichtete Tiefe des Rücksprungs kann beliebig ausgestaltet sein. Es ist jedoch besonders vorteilhaft, wenn die zur Schwenkachse hin gerichtete Tiefe des Rücksprungs im Wesentlichen dem Außendurchmesser der als Vorspanneinrichtung vorgesehenen Feder entspricht. Entsprechend ist es vorteilhaft, wenn die Querschnittskonfiguration des Rücksprungs im Wesentlichen der äußeren Querschnittskonfiguration der als Feder vorgesehenen Vorspanneinrichtung entspricht.

Zweckmäßigerweise weist der Führungsbereich zumindest einen Führungsrücksprung oder eine Führungsaussparung auf, um Eingriffsmittel des Ausgleichselements zu führen. Der Führungsrücksprung oder die Führungsaussparung kann beispielsweise als Durchbruch oder Schlitz ausgebildet sein. Ebenfalls kann dieser auch lediglich als Vertiefung im Material ausgebildet sein, so dass eine Führung der Eingriffsmittel ermöglicht wird. Die Eingriffsmittel können als Bolzen, Stab, Zapfen oder Vorsprung beliebiger Querschnittskonfigurationen ausgebildet sein. So können die Eingriffsmittel einen runden oder eckigen Querschnitt aufweisen. Es versteht sich, dass diese Eingriffsmittel einteilig ausgebildet sein können und sich im Wesentlichen über die gesamte Breite bzw. Quererstreckung des Fußelements (zumindest von der Führungsaussparung eines ersten Führungsbereichs bis zur Führungsaussparung eines gegenüberliegenden Führungsbereichs) erstrecken. Alternativ können die Eingriffsmittel auch mehrteilig ausgebildet sein und an (Seiten-) Wandabschnitten des Ausgleichselements angeordnet sein, von welchen diese sich in die Führungsaussparung bzw. den Führungsrücksprung hinein erstrecken. Zweckmäßigerweise sind die Eingriffsmittel lösbar mit dem Ausgleichselement verbunden, um somit eine leichte Austauschbarkeit zu gewährleisten. Die Eingriffsmittel stehen derart mit der Führungsaussparung oder dem Führungsrücksprung in Eingriff, dass diese darin mit Spiel geführt sind, wobei eine Führung des Ausgleichselements zwischen der Ursprungs- und der ausgelenkten Position gewährleistet wird.

Vorteilhafterweise weist der Rücksprung oder die Führungsaussparung eine gekrümmte Konfiguration auf, wobei dessen bzw. deren mittlerer Bereich dem Auflagebereich am nahesten ist. Die gekrümmte Konfiguration der Führungsaussparung bzw. des Führungsrücksprungs kann beispielsweise in der Seitenansicht (im Wesentlichen parallel zur Querachse des Fußelements) V-förmig, rund oder eckig (i.e. polygon) sein. Aufgrund der gekrümmten Konfiguration ist der mittlere Bereich der Führungsaussparung bzw. des Führungsrücksprungs dem mittleren Bereich des Auflagebereichs zweckmäßigerweise am nahesten. Dieser mittlere Bereich entspricht somit der Stellung der Eingriffsmittel des Ausgleichselements in dessen Ursprungsposition. In anderen Worten sind die Spitzen von V-förmigen Führungsrücksprüngen oder Führungsaussparungen somit der tiefste Punkt und in der Ursprungsposition des Ausgleichselements im Wesentlichen vertikal unterhalb der Schwenkachse des Ausgleichselements angeordnet.

In einer bevorzugten Ausführungsform weist das Fußelement eine Führungseinrichtung auf, um das Stützelement in Längsrichtung zu führen, wobei die Führungseinrichtung aus beidseitig am Stützelement angeordneten Führungsbereichen ausgebildet ist, welche zumindest teilweise mit einem distalen Endbereich des Stützelements überlappen. Das Fußelement weist eine Führungseinrichtung auf, um das zweite Stützelement bzw. das Fahrzeug in Längsrichtung zu führen. Die Längsrichtung entspricht somit der Richtung des Positionsversatzes des Fahrzeugs bzw. der Verlagerungsrichtung des Fahrzeugs bzw. des zweiten Stützelements. Durch die Führung des zweiten Stützelements in Längsrichtung wird somit eine Bewegung des zweiten Stützelements in Querrichtung verringert bzw. verhindert. Hierfür ist die Führungseinrichtung aus beidseitig am zweiten Stützelement angeordneten Führungsbereichen ausgebildet, die zumindest teilweise mit einem distalen Endbereich des zweiten Stützelements überlappen. Die Führungsbereiche sind somit - in Längsrichtung gesehen - neben dem zweiten Stützelement angeordnet, d.h. erstrecken sich besonders zweckmäßigerweise im Wesentlichen parallel zur Längsrichtung des Fußelements. Hierbei überlappen die Führungsbereiche zumindest teilweise mit einem distalen Endbereich des zweiten Stützelements in Vertikalrichtung derart, dass ein distaler Endbereich des zweiten Stützelements zumindest bereichsweise zwischen den Führungsbereichen angeordnet und durch diese geführt wird. Die Anordnung des zweiten Stützelements zwischen den Führungsbereichen ist derart, dass lediglich ein geringes Spiel in Querrichtung von maximal 10 mm, vorzugsweise maximal 5 mm und besonders vorzugsweise maximal 3 mm gegeben ist. Insbesondere überlappen die freien Enden der Führungsbereiche sich mit dem distalen Endbereich des zweiten Stützelements zumindest teilweise. Hierdurch wird eine Abstützung bzw. Übertragung von Seitenkräften auf das Fußelement durch Kontakt des distalen Endbereichs des zweiten Stützelements mit dem freien Ende der Führungsbereiche ermöglicht, so dass Seitenkräfte bei einem Querversatz des Fahrzeugs in das Fußelement eingeleitet werden. Infolgedessen wird sichergestellt, dass Seitenkräfte nicht mehr oder nur noch teilweise über das Schwenklager und das Ausgleichselement in das Fußelement übertragen werden, wodurch Verschleiß verringert und die Betriebssicherheit erhöht wird. Vorteilhafterweise überlappen sich die Führungsbereiche in jeder Position des zweiten Stützelements mit dessen distalem Endbereich zumindest teilweise. In anderen Worten sind die Führungsbereiche derart gestaltet, dass deren freien Enden in jeder Position im Betriebszustand des Stützfußes mit dem distalen Endbereich des zweiten Stützelements zumindest teilweise in vertikaler Richtung überlappen. Infolgedessen kann eine Übertragung von Querkräften in der Ursprungs- und der ausgelenkten Position des Stützfußes und jeder zwischenliegenden Position gewährleistet werden.

Weiterhin erfindungsgemäß ist ein Verfahren zum Betätigen eines Stützfußes für Fahrzeuge, wie Sattelanhänger oder dergleichen, vorgesehen, umfassend die Schritte: Verlagern eines zweiten Stützelements in Bezug zu einem ersten Stützelement von einer ersten in eine zweite Position, und in Eingriff bringen des ersten Stützelements mit dem Fußelement derart, dass das Fußelement zwischen dem ersten und dem zweiten Stützelement verspannt ist.

Weitere Vorteile und Merkmale der vorliegenden Erfindung ergeben sich aus der nachfolgenden Beschreibung von bevorzugten Ausführungsformen mit Bezug auf die beigefügten Figuren, wobei einzelne Merkmale der Ausführungsformen zu neuen Ausführungsformen kombiniert werden können. Es zeigen:
- Fig. 1: eine perspektivische Ansicht einer bevorzugten Ausführungsform des erfindungsgemäßen Stützfußes in der ersten Position.
- Fig. 2: eine perspektivische Ansicht einer bevorzugten Ausführungsform des erfindungsgemäßen Stützfußes in der zweiten Position.
- Fig. 3: eine Frontalansicht einer bevorzugten Ausführungsform des erfindungsgemäßen Stützfußes in der zweiten Position.
- Fig. 4: verschiedene perspektivische und Frontansichten von verschiedenen bevorzugten Ausführungsformen des erfindungsgemäßen Stützfußes.

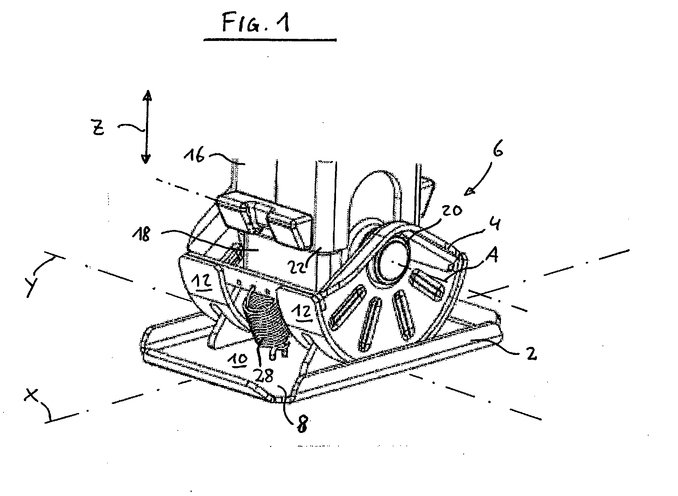

In Fig. 1 ist eine perspektivische Ansicht einer bevorzugten, beispielhaften Ausführungsform des erfindungsgemäßen Stützfußes dargestellt. Der Stützfuß weist ein Fußelement 2, ein Ausgleichselement 4 sowie eine Stützeneinheit 6 auf.

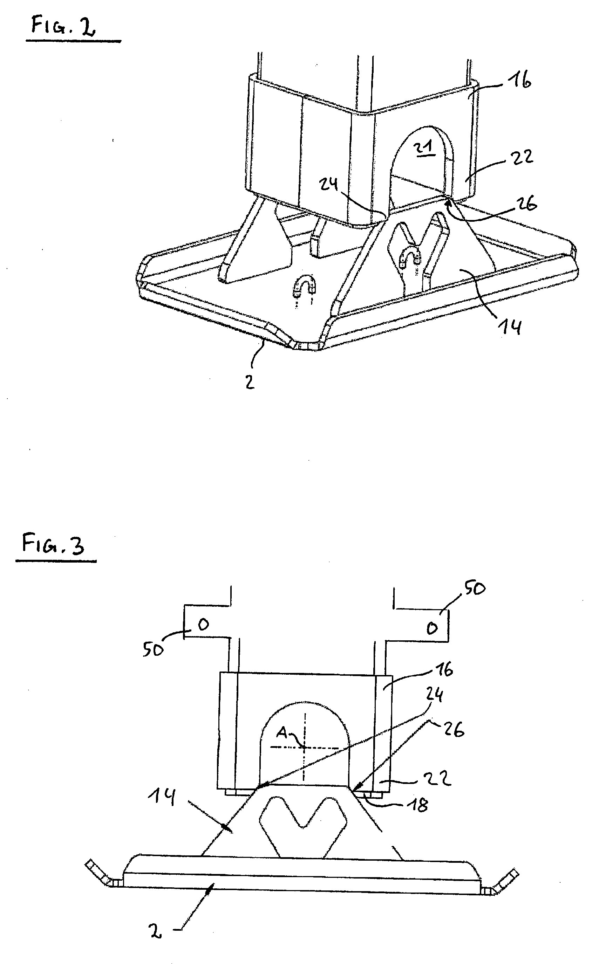

Das Fußelement 2 ist als im Wesentlichen plattenförmiger Körper ausgebildet, dessen unterer Bereich einen Auflagebereich 8 definiert, um auf einem Untergrund aufgesetzt zu werden. Der an der Oberseite des Auflagebereichs 8 vorgesehene Abrollbereich 10 ist vorgesehen, damit das Ausgleichselement 4 über seine Abrollflächen 12 im Wesentlichen in Längsrichtung bzw. Längserstreckung X abrollen kann. Das Fußelement 2 weist ferner zwei in Querrichtung Y beabstandete Führungsbereiche 14 auf, die als sich vom Abrollbereich 10 vorzugsweise im Wesentlichen senkrecht erstreckende Wandbereiche ausgebildet sind. Wie insbesondere aus Fig. 3 ersichtlich, verjüngen sich die Führungsbereiche 14 zu ihrem freien Ende hin.

Die Stützeneinheit 6 ist zumindest aus einem ersten Stützelement 16 und einem zweiten Stützelement 18 ausgebildet, welche zueinander teleskopierbar sind. Das erste Stützelement 16 ist somit zweckmäßigerweise an einem Rahmenelement 50 des Fahrzeugs befestigt und somit in dessen Position in Bezug auf das Fahrzeug im Wesentlichen nicht veränderbar. Das zweite Stützelement 18 ist in Bezug auf das erste Stützelement 16 in Verlagerungsrichtung Z zwischen einer ersten Position (Fig. 1) und einer zweiten Position (Fig. 2 und 3) verlagerbar. Hierfür sind das erste Stützelement 16 und das zweite Stützelement 18 vorteilhafterweise im Wesentlichen konzentrisch zueinander derart ausgebildet, dass das zweite Stützelement 18 in das erste Stützelement 16 hinein geschoben werden kann. Das erste Stützelement 16 ist somit zweckmäßigerweise rohrförmig ausgebildet. Gleichfalls kann das zweite Stützelement 18 ebenfalls rohrförmig ausgebildet sein. Die Querschnitte der Rohre können beliebig gewählt sein, wobei diese bevorzugt rechteckig sind.

An einem unteren Ende des zweiten Stützelements 18 ist das Ausgleichselement 4 über die Schwenkachse A an dem zweiten Stützelement 18 schwenk- bzw. drehbar über Schwenklager 20 gelagert.

An einem distalen Endbereich 22 des ersten Stützelements 16 sind Eingriffsflächen 24 vorgesehen, die mit entsprechenden Eingriffsflächen 26 der Führungsbereiche 14 in der zweiten Position des zweiten Stützelements 18 derart in Eingriff gelangen, dass das Fußelement 2 in Bezug auf das erste Stützelement 16 festgelegt bzw. arretiert ist.

Die Funktionsweise des erfindungsgemäßen Stützfußes ist wie folgt: In der ersten Position ist der erfindungsgemäße Stützfuß fähig, von aus dem Rahmenelement 50 in die Stützeinheit 6 eingeleitete Kräfte über das Ausgleichselement 4 und das Fußelement 2 auf den Untergrund zu leiten. Im Fahrbetrieb ist es jedoch notwendig, den Stützfuß in eine Fahrposition zu bewegen, d.h. das Fußelement 2 möglichst weit vom Untergrund zu beabstanden. Hierfür wird das zweite Stützelement 18 in das erste Stützelement 16 hineingefahren, bis die Eingriffsflächen 24 des ersten Stützelements 16 mit den Eingriffsflächen 26 der Führungsbereiche 14 des Fußelements 2 in Kontakt treten, wodurch das Fußelement 2 an dem ersten Stützelement 16 festgelegt wird. Ein durch das Fußelement 2 im Fahrbetrieb hervorgerufenes Klappergeräusch wird somit vermieden. Bei einem weiteren Einfahren des zweiten Stützelements 18 in das erste Stützelement 16 in eine (nicht dargestellte) dritte Position kann das erste Stützelement 16 oder Teilbereiche hiervon mit dem Ausgleichselement 4 in Kontakt gebracht werden, so dass das Ausgleichselement 4 ebenfalls an dem ersten Stützelement 16 festgelegt wird. Dies ist möglich, da eine Relativbewegung zwischen Fußelement 2 und Ausgleichselement 4 aufgrund der Verbindung über Federn 28 möglich ist. Infolgedessen wird ein Klappern aufgrund von Relativbewegungen von sowohl Fußelement 2 als auch Ausgleichselement 4 vorteilhafterweise verhindert.

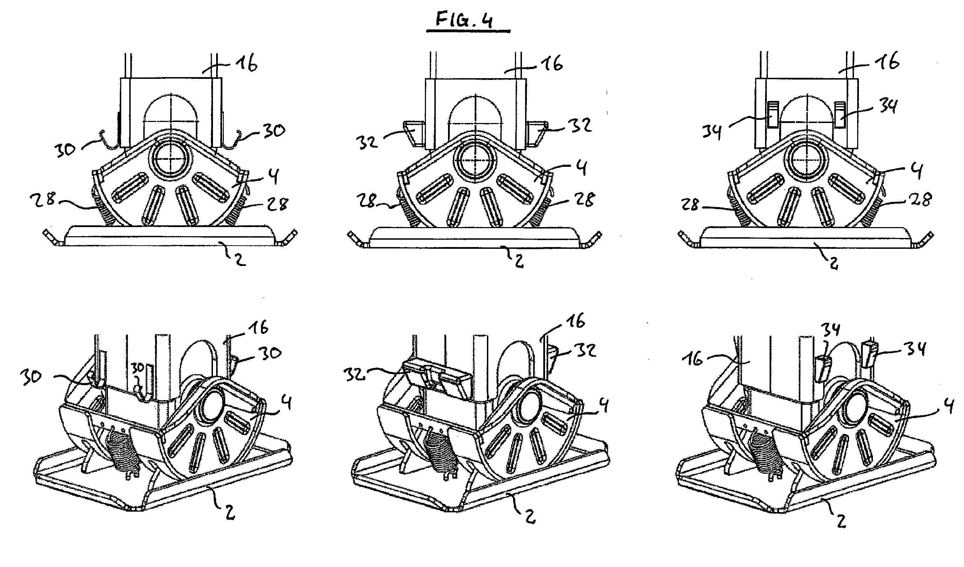

Der Kontakt bzw. der Eingriff zwischen erstem Stützelement 16 und dem Ausgleichselement 4 kann besonders zweckmäßigerweise über an einem distalen Endbereich 22 des ersten Stützelements 16 vorgesehenen Eingriffselemente erfolgen, wie diese in Figur 4 dargestellt sind. Die Eingriffselemente können beispielsweise - in Längsrichtung X gesehen - vorne und hinten am ersten Stützelement 16 vorgesehen sein. Die Eingriffselemente sind hierbei besonders vorteilhafterweise rückstellfähig bzw. elastisch ausgebildet. So können die Eingriffselemente beispielsweise als Federklammern 30 oder Gummielemente 32 ausgebildet sein. Zusätzlich oder alternativ können Eingriffselemente vorgesehen sein, welche an seitlichen Wandbereichen des distalen Endbereichs 22 des ersten Stützelements 16 angeordnet sind. Diese können als Federklammer oder Gummielement 34 ausgebildet sein. Besonders bevorzugt weisen die Eingriffselemente eine Keilform auf. Durch die Anordnung in Seitenbereichen wird darüber hinaus zweckmäßigerweise eine Festlegung des Ausgleichselements 4 in Querrichtung Y ermöglicht.

### Bezugszeichenliste

- 2: Fußelement
- 4: Ausgleichselement
- 6: Stützeneinheit
- 8: Auflagebereich
- 10: Abrollbereich
- 12: Abrollfläche
- 14: Führungsbereich
- 16: erstes Stützelement
- 18: zweites Stützelement
- 20: Schwenklager
- 21: Ausnehmung
- 22: distaler Endbereich
- 24: Eingriffsfläche
- 26: Eingriffsfläche
- 28: Feder
- 30: Federklammer
- 32: Gummielement
- 34: Gummielement
- 50: Rahmenelement
- A: Schwenkachse
- X: Längserstreckung
- Y: Querrichtung
- Z: Verlagerungsrichtung

## Patentansprüche

1. Stützfuß für Fahrzeuge, wie Sattelanhänger oder dergleichen, umfassend ein Fußelement (2) mit einem Auflagebereich (8) zur Auflage auf einem Untergrund und ein Ausgleichselement (4) zur Aufnahme einer Stützeneinheit (6) und zum Ausgleich eines Positionsversatzes derselben, wobei die Stützeneinheit (6) teleskopierbar und mit einem ersten (16) und einem zweiten (18) Stützelement ausgebildet ist, **dadurch gekennzeichnet, dass**
das zweite Stützelement (18) in Bezug auf das erste Stützelement (16) zwischen einer ersten und einer zweiten Position verlagerbar ist, und wobei das erste Stützelement (16) in der zweiten Position des zweiten Stützelements (18) mit einem Führungsbereich (14) des Fußelements (2) welcher als sich vom Auflagebereich (8) bzw. dessen Abrollbereich (10), im wesentlichen senkrecht erstreckender Wandbereich ausgebildet ist, derart im Eingriff steht, dass das Fußelement (2) mit dem ersten Stützelement (16) verspannt wird.

2. Stützfuß nach Anspruch 1, wobei sich der Führungsbereich (14) zu seinem freien Ende hin verjüngt.

3. Stützfuß nach einem der vorhergehenden Ansprüche, wobei das erste Stützelement (16) einen distalen Endbereich (22) aufweist, der in der zweiten Position mit dem Fußelement (2) in Eingriff steht.

4. Stützfuß nach einem der vorhergehenden Ansprüche, wobei das erste Stützelement (16) eine Ausnehmung (21) an einem distalen Endbereich (22) aufweist, welche ausgelegt ist, in der zweiten Position eine Schwenkachse (A) des Ausgleichselements (4) zumindest teilweise aufzunehmen.

5. Stützfuß nach einem der vorhergehenden Ansprüche, wobei das zweite Stützelement (18) in Bezug auf das erste Stützelement (16) weiterhin in eine dritte Position verlagerbar ist, in welcher das erste Stützelement (16) mit dem Ausgleichselement (4) und/oder dessen Schwenkachse (A) in Eingriff bring**bar** ist.

6. Stützfuß nach einem der vorhergehenden Ansprüche, wobei die Eingriffsfläche (24) des ersten Stützelements (16) in Bezug auf die Verlagerungsrichtung (Z) des zweiten Stützelements (18) geneigt und vorzugsweise im Wesentlichen kongruent zu einer Eingriffsfläche (26) des Fußelements (2) ist.

7. Stützfuß nach einem der vorhergehenden Ansprüche, wobei zumindest ein Eingriffselement (30; 32; 34) am ersten Stützelement (16) vorgesehen ist, welches ausgelegt ist, mit dem Ausgleichselement (4) in Eingriff zu gelangen, und wobei das Eingriffselement (30; 32; 34) vorzugsweise als Federklammer oder Gummielement ausgebildet ist.

8. Stützfuß nach Anspruch 7, wobei zwei Eingriffselemente (30; 32; 34) vorgesehen sind, die an im Wesentlichen gegenüberliegenden Seiten des ersten Stützelements (16) angeordnet sind.

9. Stützfuß nach einem der Ansprüche 7 oder 8, wobei das Eingriffselement (30; 32; 34) in der zweiten und/oder dritten Position mit dem Ausgleichselement (4) in Eingriff steht.

10. Stützfuß nach einem der vorhergehenden Ansprüche, wobei das Fußelement (2) eine Führungseinrichtung aufweist, um das zweite Stützelement (18) in Längsrichtung zu führen und wobei die Führungseinrichtung aus zwei beidseitig am zweiten Stützelement (18) angeordneten Führungsbereichen (14) ausgebildet ist, welche zumindest teilweise mit einem distalen Endbereich (22) des zweiten Stützelements (18) überlappen.

11. Verfahren zum Betätigen eines Stützfußes für Fahrzeuge, wie Sattelanhänger oder dergleichen, umfassend die Schritte:
- Verlagern eines zweiten Stützelements (18) in Bezug zu einem ersten Stützelement (16) von einer ersten in eine zweite Position, und
- in Eingriff bringen des ersten Stützelements (16) mit einem Führungsbereich (14) des Fußelements (2), welcher als sich vom Auflagebereich (10), im wesentlichen senkrecht erstreckender Wandbereich ausgebildet ist, derart, dass das Fußelement (2) mit dem ersten Stützelement (16) verspannt wird.

## Claims

1. A supporting foot for vehicles, such as semi-trailers or the like, comprising a foot element (2) with a resting portion (8) for resting on an underlying surface, and a compensating element (4) for receiving a support unit (6) and for compensating a positional offset of same, wherein the support unit (6) is telescopic and comprises a first supporting element (16) and a second supporting element (18),
**characterized in that**
the second supporting element (18) can be moved between a first and a second position with respect to the first supporting element (16), and
wherein the first supporting element (16), in the second position of the second supporting element (18), is in engagement with a guiding portion (14) of the foot element (2), which guiding portion is designed as a wall portion extending essentially perpendicularly from the resting portion (8) or the rolling portion (10) thereof, respectively, such that the foot element (2) is braced with the first supporting element (16).

2. The supporting foot according to claim 1, wherein the guiding portion (14) tapers towards the free end thereof.

3. The supporting foot according to any one of the preceding claims, wherein the first supporting element (16) comprises a distal end portion (22) which, in the second position, is in engagement with the foot element (2).

4. The supporting foot according to any one of the preceding claims, wherein the first supporting element (16) comprises a notch (21) at a distal end portion (22) which is adapted, in the second position, to at least partially receive a swivel axis (A) of the compensating element (4).

5. The supporting foot according to any one of the preceding claims, wherein the second supporting element (18) can further be moved into a third position relative to the first supporting element (16), in which third position the first supporting element (16) can be made to engage with the compensating element (4) and/or the swivel axis (A) thereof.

6. The supporting foot according to any one of the preceding claims, wherein the engagement surface (24) of the first supporting element (16) is inclined relative to the direction of displacement (Z) of the second supporting element (18) and preferably is essentially congruent to an engagement surface (26) of the foot element (2).

7. The supporting foot according to any one of the preceding claims, wherein at least one engagement element (30; 32; 34) is provided at the first supporting element (16), which engagement element is adapted to engage with the compensating element (4), and wherein the engagement element (30; 32; 34) preferably is designed as a spring clip or as a rubber element.

8. The supporting foot according to claim 7, wherein two engagement elements (30; 32; 34) are provided which are arranged at essentially opposite sides of the first supporting element (16).

9. The supporting foot according to any one of claims 7 or 8, wherein the engagement element (30; 32; 34), in the second position and/or the third position, is in engagement with the compensating element (4).

10. The supporting foot according to any one of the preceding claims, wherein the foot element (2) comprises a guiding device in order to guide the second supporting element (18) in the longitudinal direction, and wherein the guiding device is formed from two guiding portions (14) arranged at either side of the second supporting element (18), which guiding portions overlap at least partially with a distal end portion (22) of the second supporting element (18).

11. A method of actuating a supporting foot for vehicles, such as semi-trailers or the like, comprising the steps:
- displacing a second supporting element (18) relative to a first supporting element (16) from a first into a second position, and
- causing the first supporting element (16) to engage with a guiding portion (14) of the foot element (2), which guiding portion is designed as a wall portion extending essentially perpendicularly from the resting portion (10), such that the foot element (2) is braced with the first supporting element (16).

## Revendications

1. Pied de soutien pour véhicules automobiles, comme des remorques de semi-remorques ou similaires, comprenant un élément de pied (2) avec une zone d'appui (8) destinée à venir s'appuyer sur un sous-sol, et un élément de compensation (4) pour recevoir une unité de soutien (6) et pour compenser un décalage de position de celle-ci, dans lequel l'unité de soutien (6) est réalisée de manière télescopique et avec un premier élément de soutien (16) et un second élément de soutien (18),
**caractérisé en ce que**
le second élément de soutien (18) est déplaçable par référence au premier élément de soutien (16) entre une première et une seconde position, et **en ce que** le premier élément de soutien (16), dans la seconde position du second élément de soutien (18), est en engagement avec une zone de guidage (14) de l'élément de pied (2), laquelle est réalisée sous la forme d'une zone de paroi s'étendant sensiblement verticalement depuis la zone d'appui (8) ou depuis sa zone de roulement (10), de telle manière que l'élément de pied (2) est précontraint avec le premier élément de soutien (16).

2. Pied de soutien selon la revendication 1, dans lequel la zone de guidage (14) va en se rétrécissant en direction de son extrémité libre.

3. Pied de soutien selon l'une des revendications précédentes, dans lequel le premier élément de soutien (16) comprend une zone d'extrémité distale (22) qui est en engagement avec l'élément de pied (2) dans la seconde position.

4. Pied de soutien selon l'une des revendications précédentes, dans lequel le premier élément de soutien (16) comporte un évidement (21) à sa zone d'extrémité distale (22), lequel est conçu de manière à recevoir au moins partiellement un axe de pivotement (A) de l'élément de compensation (4) dans la seconde position.

5. Pied de soutien selon l'une des revendications précédentes, dans lequel le second élément de soutien (18) et en outre déplaçable, par référence au premier élément de soutien (16), jusque dans une troisième position dans laquelle le premier élément de soutien (16) peut être amené en engagement avec l'élément de compensation (4) et/ou avec son axe de pivotement (A).

6. Pied de soutien selon l'une des revendications précédentes, dans lequel la surface d'engagement (24) du premier élément de soutien (16) est inclinée par rapport à la direction de déplacement (Z) du second élément de soutien (18) et est de préférence sensiblement congruente à une surface d'engagement (26) de l'élément de pied (2).

7. Pied de soutien selon l'une des revendications précédentes, dans lequel au moins un élément d'engagement (30 ; 32 ; 34) est prévu sur le premier élément de soutien (16), et est conçu pour parvenir en engagement avec l'élément de compensation (4), et dans lequel l'élément d'engagement (30 ; 32 ; 34) est réalisé de préférence comme une pince-ressort ou comme un élément en caoutchouc.

8. Pied de soutien selon la revendication 7, dans lequel il est prévu deux éléments d'engagement (30 ; 32 ; 34) qui sont agencés sur des côtés sensiblement opposés du premier élément de soutien (16).

9. Pied de soutien selon l'une des revendications 7 ou 8, dans lequel l'élément d'engagement (30 ; 32 ; 34) est en engagement avec l'élément de compensation (4) dans la seconde et/ou dans la troisième position.

10. Pied de soutien selon l'une des revendications précédentes, dans lequel l'élément de pied (2) comprend un système de guidage afin de guider le second élément de soutien (18) en direction longitudinale, et dans lequel le système de guidage est réalisé par deux zones de guidage (14) agencées sur les deux côtés sur le second élément de soutien (18), ces zones chevauchant au moins partiellement une zone d'extrémité distale (22) du second élément de soutien (18).

11. Procédé pour actionner un pied de soutien pour véhicules automobiles, comme des remorques de semi-remorques ou similaires, comprenant les étapes consistant à :
- déplacer un second élément de soutien (18) par référence à un premier élément de soutien (16) depuis une première position jusque dans une seconde position, et
- amener en engagement le premier élément de soutien (16) avec une zone de guidage (14) de l'élément de pied (2), cette zone étant réalisée comme une zone de paroi s'étendant sensiblement perpendiculairement depuis la zone d'appui (10), de telle manière que l'élément de pied (2) est précontraint avec le premier élément de soutien (16).
